# EUROPÄISCHE PATENTANMELDUNG

(11) **EP 0 922 880 A2**
(43) Veröffentlichungstag der Anmeldung: **16.06.1999**
(21) Anmeldenummer: 98113163.4
(22) Anmeldetag: 15.07.1998
(51) Int. Cl.: F16F 15/14

(54) **Torsionschwingungsdämpfer**

(30) Priorität: 02.12.1997 DE 19753410
(71) Anmelder: Firma Carl Freudenberg, 69469 Weinheim (DE)
(72) Erfinder: Aufderheide, Uwe, 79424 Auggen (DE); Barsch, Peter, Dr., 79424 Auggen (DE)

(57) **Zusammenfassung**

Torsionsschwingungsdämpfer mit einem Nabenring (1) und einem dem Nabenring (1) mit radialem Abstand (2) konzentrisch zugeordneten Schwungring (3), wobei in dem durch den Abstand (2) gebildeten Spalt (4) ein Federkörper (5) aus einem im wesentlichen inkompressiblen elastomeren Werkstoff angeordnet ist. Der Spalt (4) weist zumindest einen Ausgleichsraum (6) vergrößerten Querschnitts zur Aufnahme einer temperaturbedingten Volumenvergrößerung des Federkörpers (5) auf.

## Beschreibung

### Technisches Gebiet

Die Erfindung betrifft einen Torsionsschwingungsdämpfer mit einem Nabenring und einem dem Nabenring mit radialem Abstand konzentrisch zugeordneten Schwungring, wobei in dem durch den Abstand gebildeten Spalt ein Federkörper aus einem im wesentlichen inkompressiblen elastomeren Werkstoff angeordnet ist.

### Stand der Technik

Ein solcher Torsionsschwingungsdämpfer ist aus dem DE-GM 66 07 259 bekannt. Der Federkörper des vorbekannten Torsionsschwingungsdämpfers ist ohne Vulkanisation und ohne Verwendung eines Bindemittels eingespannt. Um zu verhindern, daß der Schwungring nach einer eventuellen Zerstörung des Federkörpers vom Nabenring abrutscht, ist es vorgesehen, daß der Spalt im Bereich seiner Stirnseiten durch radial verlaufende Außenflansche abgesperrt ist. Durch die Außenflansche wird außerdem verhindert, daß der Federkörper im Bereich seiner freien Oberflächen ausweicht. An den Rändern wird die gleiche Spannung im Material des Federkörpers aufrechterhalten wie im axial weiter innenliegenden Teil.

Der Federkörper des vorbekannten Torsionsschwingungsdämpfers kann einteilig ausgebildet sein. Der einteilig ausgebildete Federkörper ist zwischen dem Nabenring und dem Schwungring eingepreßt, wobei für das durch die elastische Verformung bei der Montage verdrängte Material eine ringförmige Aussparung vorgesehen ist, die beim Zusammenbau des Torsionsschwingungsdämpfers den Federkörper teilweise aufnimmt.

### Darstellung der Erfindung

Der Erfindung liegt die Aufgabe zugrunde, einen Torsionsschwingungsdämpfer der vorbekannten Art derart weiterzuentwickeln, daß trotz betriebsbedingter Wärmedehnungen des Federkörpers eine Relativverlagerung seiner stirnseitigen, freien Oberflächen zu Naben- und/ oder Schwungring zuverlässig vermieden wird. Der erfindungsgemäße Torsionsschwingungsdämpfer soll einen einfachen und teilearmen Aufbau aufweisen sowie gleichbleibend gute Gebrauchseigenschatten während einer langen Gebrauchsdauer.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß der Spalt zumindest einen Ausgleichsraum vergrößerten Querschnitts zur Aufnahme einer temperaturbedingten Volumenvergrößerung des Federkörpers aufweist. Bei Temperaturbeaufschlagung des Torsionsschwinungsdämpfers, beispielsweise im Motorraum eines Kraftfahrzeugs, dehnt sich der Federkörper aus, wobei sich bei konventionell gestalteten Torsionsschwingungsdämpfern, deren Spalt keinen Ausgleichsraum aufweist, durch wärmebedingte Zunahme von Druck- und Schubspannungen innerhalb des Federkörpers eine Relativverlagerung der Oberflächen des Federkörpers relativ zu den Oberflächen des angrenzenden Naben- und/ oder Schwungrings ergibt. Ist der Federkörper ungebunden in den Spalt eingepreßt, entsteht bei Temperaturbeaufschlagung durch Reibung zwischen dem Federkörper und den angrenzenden Oberflächen von Nabenring und/ oder Schwungring abrasiver Verschleiß auf den Oberflächen des Federkörpers. Ist der Federkörper demgegenüber adhäsiv durch eine Verklebung oder Vulkanisation mit dem Nabenring und dem Schwungring verbunden, ergeben sich bei Temperaturbeaufschlagung des Torsionsschwingungsdämpfers oftmals unzulässig hohe Schubspannungen im Kontaktbereich zwischen dem elastomeren Werkstoff des Federkörpers und den angrenzenden Oberflächen von Naben- und Schwungring. Wird ein noch zulässiger Temperaturgrenzwert überschritten, löst sich entweder die Bindung und/ oder der elastomere Werkstoff schert neben der Bindung ab. In jedem Fall wird der Torsionsschwinungsdämpfer zerstört.

Durch die erfindungsgemäße Ausgestaltung werden temperaturbedingte, unzulässig hohe Druck- und Schubspannungen im Federkörper innerhalb des Spalts sicher ausgeschlossen. Wird der beanspruchte Torsionsschwingungsdämpfer beispielsweise im Motorraum eines Kraftfahrzeugs mit hohen Temperaturen im Bereich von bis zu 150° C beaufschlagt, vergrößert sich zunächst allmählich die Vorspannung des Federkörpers auf einen noch zulässigen Wert, wobei ein unkritisches, zulässiges Niveau der Spannungen auch bei weiterer Temperaturbeaufschlagung in jedem Fall erhalten bleibt, da die temperaturbedingte Volumenvergrößerung in den Ausgleichsraum ausweicht und nach vollständiger Füllung des Ausgleichsraums mehr Elastomervolumen zum Spannungsabbau zur Verfügung steht. Die spezifische Vorspannung des Federkörpers im Bereich des Ausgleichsraums ist stets geringer, als die spezifische Vorspannung in den Bereichen, die dem Ausgleichsraum axial benachbart zugeordnet sind und eine vergleichsweise geringere radiale Weite aufweisen.

Zumindest eine der dem Federkörper zugewandten Oberflächen von Nabenring und/ oder Schwungring kann zumindest eine in Richtung des Federkörpers offene, umlaufende Entlastungsnut aufweisen. Das Volumen der als Ausgleichsraum ausgebildeten Entlastungsnut ist im wesentlichen vom elastomeren Werkstoff des Federkörpers und damit seinem spezifischen Dehnungsverhalten bei Wärmebeaufschlagung abhängig. Bei einer vergleichsweise geringen Wärmebeaufschlagung und/ oder einem elastomeren Werkstoff, bei dem eine Wärmebeaufschlagung nur eine vergleichsweise geringe Dehnung bewirkt, ist es ausreichend und von Vorteil, wenn nur in der dem Federkörper zugewandten Oberfläche des Nabenrings eine Entlastungsnut angeordnet ist. Dadurch ist der Schwungring einfach gestaltet und kostengünstig herstellbar.

Gelangen Federkörper aus elastomeren Werkstoffen zur Anwendung, die bei Temperaturbeaufschlagung eine vergleichsweise größere Wärmedehnung aufweisen, hat es sich als vorteilhaft bewährt, wenn der Nabenring und der Schwungring jeweils zumindest eine Entlastungsnut aufweisen, die einander in radialer Richtung gegenüberliegend angeordnet sind und den Ausgleichsraum begrenzen. Die spezifische Vorspannung des Federkörpers innerhalb des Ausgleichsraums ist bei einer derartigen Ausgestaltung im Vergleich zur Vorspannung in den axial angrenzenden Bereichen weiter reduziert.

Der Federkörper ist herstellungsbedingt kreisringförmig ausgebildet und weist einen im wesentlichen rechteckigen Querschnitt mit gleichbleibender Dicke entlang seiner axialen Erstreckung auf. Wird dieser Federkörper in den Spalt zwischen dem Nabenring und dem Schwungring eingepreßt, ergeben sich - im Querschnitt betrachtet - Abschnitte mit von einander abweichenden spezifischen Druck- und Schubspannungen. Die Bereiche größerer Spannungen befinden sich axial benachbart zum Ausgleichsraum.

Wird der Federkörper zwischen den Nabenring und den Schwungring vulkanisiert, wird der Torsionsschwingungsdämpfer im Anschluß an die Verfestigung des Federkörpers in radialer Richtung kalibriert, um gebrauchsdauerverringernde Zugspannungen innerhalb des elastomeren Federkörpers zu vermeiden. Im Anschluß an die Kalibrierung weist der Federkörper ebenfalls, wie zuvor beschrieben, Bereiche unterschiedlicher spezifischer Vorspannung auf. Durch den Ausgleichsraum werden auch bei einem vulkanisierten Torsionsschwingungsdämpfer unzulässig hohe wärmebedingte Schubspannungen im Bereich der stirnseitigen Enden des Spalts vermieden. Ein Ablösen der Bindung des Federkörpers von Nabenring und/ oder Schwungring im Bereich seiner stirnseitigen Enden und/ oder dessen Zerstörung in diesem Bereich ist bei dem erfindungsgemäßen Torsionsschwingungsdämpfer ausgeschlossen.

Der Nabenring kann einen topfförmigen Querschnitt aufweisen und den Schwungring außenseitig mit einem Axialvorsprung umschließen, wobei der Axialvorsprung als Riemenscheibe ausgebildet ist. Bei einer Ausführung mit primärseitigem Riemenantrieb werden Schwingungen im Riementrieb auf ein Minimum begrenzt.

Die erfindungsgemäße Ausgestaltung des beanspruchten Torsionsschwinungsdämpfers ist insbesondere dann vorteilhaft, wenn das Verhältnis aus der axialen Länge des Spalts und seiner radialen Weite zumindest 5, bevorzugt zumindest 10 beträgt. Als radiale Weite des Spalts wird der Bereich axial außerhalb des Ausgleichsraums betrachtet.

Bevorzugt ist der Federkörper ungehaftet kraftschlüssig innerhalb des Spalts angeordnet.

Der Nabenring besteht bevorzugt aus einem tiefgezogenen, metallischen Werkstoff. Hierbei ist von Vorteil, daß derartige Torsionsschwingungsdämpfer einfach und kostengünstig herstellbar sind.

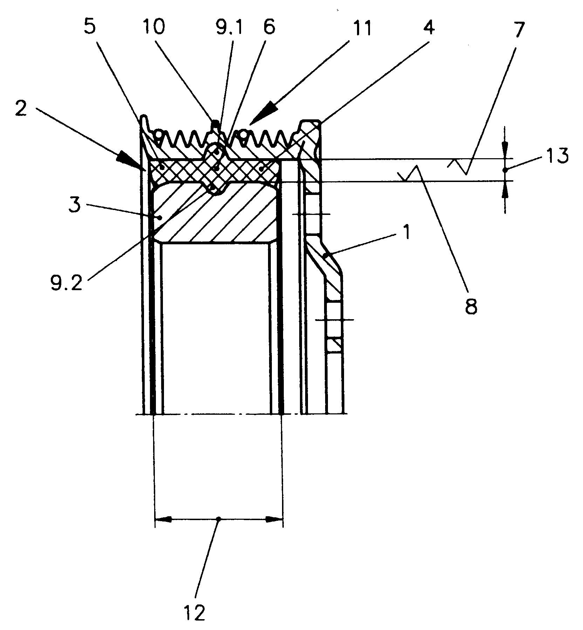

### Kurzbeschreibung der Zeichnung

Der erfindungsgemäße Torsionsschwingungsdämpfer wird nachfolgend anhand der Figur näher erläutert. Diese zeigt ein Ausführungsbeispiel in geschnittener und schematischer Darstellung.

### Ausführung der Erfindung

Im Ausführungsbeispiel ist ein Torsionsschwingungsdämpfer gezeigt, dessen Nabenring 1 - im Querschnitt betrachtet - im wesentlichen topfförmig ausgebildet ist, aus einem tiefgezogenen Blech besteht und außenseitig auf seinem Axialvorsprung 10 mit einer Profilierung zur Aufnahme von zwei Riemen versehen ist. Der Schwungring 3, der in diesem Ausführungsbeispiel ebenfalls aus einem metallischen Werkstoff besteht, ist mit radialem Abstand 2 innerhalb des Axialvorsprungs 10 angeordnet, wobei innerhalb des durch den Anstand 2 gebildeten Spalts 4 ein Federkörper 5 aus Gummi angeordnet ist.

Der Federkörper 5 ist den radial angrenzenden Oberflächen 7, 8 des Nabenrings 1 und des Schwungrings 3 ungehaftet zugeordnet und berührt die Oberflächen 7, 8 unter elastischer Vorspannung kraftschlüssig.

Der Spalt 4 ist mit einem Ausgleichsraum 6 vergrößerten Querschnitts versehen, so daß der Federkörper 5 entlang seiner axialen Erstreckung voneinander abweichenden Druck- und Schubspannungen ausgesetzt ist. Im Bereich der Entlastungsnut 9 ist die Vorspannung innerhalb des Federkörpers 5 wesentlich geringer als in den daran axial angrenzenden Bereichen. Der eingepreßte Federkörper 5 ist herstellungsbedingt kreisringförmig und weist einen im wesentliche rechteckigen Querschnitt auf.

Der Federkörper 5 weist eine herstellungsbedingte Dicke auf, die etwas größer ist, als die radiale Weite 13.

Beim Einpressen des Federkörpers 5 wird der im wesentlichen inkompressible elastomere Werkstoff elastisch verformt und in axialer Richtung länger, wobei ein Teil des verdrängten Werkstoffs in den Ausgleichsraum 6 ausweicht.

Bei einer Temperaturbeaufschlagung, beispielsweise beim Betrieb des erfindungsgemäßen Torsionsschwingungsdämpfers im Motorraum eines Kraftfahrzeugs, erhöht sich die radiale Vorspannung axial außerhalb des Ausgleichsraums 6 stärker als im Ausgleichsraum 6, wobei die temperaturbedingte Volumenvergrößerung weitgehend im Ausgleichsraum 6 aufgenommen wird. Der Ausgleichsraum 6 ist dabei derart dimensioniert, daß auch bei maximal zulässiger Temperaturbeaufschlagung die radiale Vorspannung in den axial angrenzenden Teilbereichen soweit reduziert wird, daß ein zulässiger Grenzwert nicht überschritten wird. Dadurch wird vermieden, daß sich der Federkörper 5 im Bereich seiner freien Oberflächen, d. h. im Bereich seiner Stirnseiten axial verlagert. Eine Relativbewegung zwischen den Oberflächen des Federkörpers 5 und den Oberflächen 7, 8 des Nabenrings 1 und/ oder des Schwungrings 2 ist ausgeschlossen. Der erfindungsgemäße Torsionsschwingungsdämpfer weist daher gleichbleibend gute Gebrauchseigenschaften während einer langen Gebrauchsdauer auf.

## Patentansprüche

1. Torsionsschwingungsdämpfer mit einem Nabenring und einem dem Nabenring mit radialem Abstand konzentrisch zugeordneten Schwungring, wobei in dem durch den Abstand gebildeten Spalt ein Federkörper aus einem im wesentlichen inkompressiblen elastomeren Werkstoff angeordnet ist, **dadurch gekennzeichnet**, daß der Spalt (4) zumindest einen Ausgleichsraum (6) vergrößerten Querschnitts zur Aufnahme einer temperaturbedingten Volumenvergrößerung des Federkörpers (5) aufweist.

2. Torsionsschwingungsdämpfer nach Anspruch 1, dadurch gekennzeichnet, daß zumindest eine der dem Federkörper (5) zugewandten Oberflächen (7, 8) von Nabenring (1) und/oder Schwungring (3) zumindest eine in Richtung des Federkörpers (5) offene, umlaufende Entlastungsnut (9) aufweist.

3. Torsionsschwingungsdämpfer nach einem der Ansprüche 1 bis 2, dadurch gekennzeichnet, daß der Nabenring (1) und der Schwungring (3) jeweils zumindest eine Entlastungsnut (9.1, 9.2) aufweisen, die einander in radialer Richtung gegenüberliegend angeordnet sind und den Ausgleichsraum (6) begrenzen.

4. Torsionsschwingungsdämpfer nach einem der Ansprüche 1 bis 3, dadurch gekennzeichnet, daß der Nabenring (1) einen topfförmigen Querschnitt aufweist, den Schwungring (3) außenseitig mit einem Axialvorsprung (10) umschließt und daß der Axialvorsprung (10) als Riemenscheibe (11) ausgebildet ist.

5. Torsionsschwingungsdämpfer nach einem der Ansprüche 1 bis 4, dadurch gekennzeichnet, daß das Verhältnis aus der axialen Länge (12) des Spalts und seiner radialen Weite (13) zumindest 5 beträgt.

6. Torsionsschwingungsdämpfer nach einem der Ansprüche 1 bis 5, dadurch gekennzeichnet, daß der Federkörper (5) ungehaftet kraftschlüssig innerhalb des Spalts (4) angeordnet ist.

7. Torsionsschwingungsdämpfer nach einem der Ansprüche 1 bis 6, dadurch gekennzeichnet, daß der Nabenring (1) aus einem tiefgezogenen, metallischen Werkstoff besteht.
